# EUROPÄISCHE PATENTSCHRIFT

(11) **EP 2 654 160 B1**
(45) Veröffentlichungstag und Bekanntmachung des Hinweises auf die Patenterteilung: **13.07.2016**
(21) Anmeldenummer: 12164595.6
(22) Anmeldetag: 18.04.2012
(51) Int. Cl.: H02J 1/08, H02J 1/10, H02J 1/14, H02J 3/38

(54) **Verfahren und Schaltungsanordnung zum Stabilisieren einer elektrischen Spannung in einem Zwischenkreis**
Method and switching assembly for stabilising electric current in an intermediate circuit
Procédé et circuit destinés à la stabilisation d'une tension électrique dans un circuit intermédiaire

(43) Veröffentlichungstag der Anmeldung: 23.10.2013
(73) Patentinhaber: Siemens Aktiengesellschaft, 80333 München (DE)
(72) Erfinder: Benesch, Norbert, Dr., 90562 Heroldsberg (DE); Wedel, Bernd, 91096 Möhrendorf (DE)

(56) Entgegenhaltungen:
- US-A1- 2002 175 522
- US-B2- 6 985 799

## Beschreibung

Die Erfindung betrifft ein Verfahren zum Stabilisieren einer elektrischen Spannung in einem Zwischenkreis, in welchen von einem elektrischen Erzeuger eine gleichgerichtete Spannung eingespeist wird und an welchem ein elektrischer Verbraucher betrieben wird. Zu der Erfindung gehört auch eine entsprechende Schaltungsanordnung.

In Fertigungs- und Prozessanlagen kann vorgesehen sein, die elektrischen Verbraucher, wie etwa elektrische Motoren zum Antreiben von Fließbändern, Walzen oder Pumpen, über ein Gleichspannungsnetz mit elektrischer Energie zu versorgen. Dieses Gleichspannungsnetz wird Zwischenkreis genannt, da es sich zwischen einerseits einer Einspeiseeinrichtung zum Einspeisen einer gleichgerichteten Spannung aus einem elektrischen Versorgungsnetz (z.B. einem dreiphasigen 50 Hz, 400 V Wechselspannungs-Versorgungsnetz) und andererseits den elektrischen Verbrauchern befindet. Die Einspeiseeinrichtung erzeugt die gleichgerichtete Spannung mittels eines Gleichrichters, sodass der zeitliche Spannungsverlauf noch eine Restwelligkeit aufweisen kann. In dem Zwischenkreis ist deshalb in der Regel ein Zwischenkreiskondensator bereitgestellt, dessen Kapazität ausreichend groß ist, um einerseits diese Restwelligkeit zu glätten und andererseits bei einem spontanen Leistungsbedarf eines elektrischen Verbrauchers, beispielsweise beim Anfahren eines Elektromotors, den sprunghaften Anstieg des Energiebedarfs decken zu können.

Je nach Größe der Anlage kann es sich bei der Gleichspannungsversorgung um ein mehr oder weniger weit verzweigtes Netz von Gleichspannungsleitungen handeln. Die Leitungsinduktivität ergibt dabei zusammen mit den Zwischenkreiskondensatoren einen Sperrkreis, der bei seiner Resonanzfrequenz eine hohe Impedanz aufweisen kann. Dies kann in Verbindung mit dem elektrischen Verhalten vieler Verbraucher im Zwischenkreis zu einem unerwünschten Effekt führen: Handelt es sich beispielsweise bei einem Verbraucher um einen Drehstrommotor, so ist dieser in der Regel über einen Wechselrichter an den Zwischenkreis gekoppelt, welcher aus der gleichgerichteten Spannung des Zwischenkreises eine mehrphasige Wechselspannung zum Erzeugen des Drehstroms für den Motor bildet. Die Schaltfrequenzen des Wechselrichters können dabei im Bereich der Resonanzfrequenz des Zwischenkreises und darüber liegen. Zudem verhält sich ein leistungselektronischer Verbraucher, wie ein Wechselrichter zum Betrieb eines Drehstrommotors, oftmals wie ein Bauelement mit negativer Eingangsimpedanz. Ursächlich dafür ist z.B. die Wechselrichter-Stromregelung, die bei sinkender Gleichspannung am Anschlusspunkt des Wechselrichters am Zwischenkreis als Reaktion darauf den Eingangsstrom für den Motor vergrößert, um die vom Motor abgegebene Leistung konstant zu halten. Eine solche Stromerhöhung bei einer Spannungsabnahme (und umgekehrt die Stromsenkung bei steigender Spannung) entspricht dem Verhalten eines Bauteils mit negativer Eingangsimpedanz. Es ergibt sich daher nicht die stabilisierende, d.h. dämpfende Wirkung eines normalen ohmschen Widerstands (positive Eingangsimpedanz), was in Kombination mit dem Resonanzverhalten und der damit verbundenen hohen Ausgangsimpedanz des Zwischenkreises zu einer Destabilisierung der Zwischenkreisspannung führen kann.

Allgemein ergibt sich das beschriebene Problem in der Regel in einem Zwischenkreis, in welchem von einem Erzeuger eine gleichgerichtete Spannung erzeugt und an welchem ein elektrischer Verbraucher betrieben wird, wobei der Erzeuger und der Verbrauch elektrische Energie austauschen. Ein Erzeuger kann hierbei die beschriebene Einspeiseeinrichtung sein oder aber auch ein Generator oder auch eine Batterie. Erzeugerseitig können Resonanzprobleme auftreten, falls der Erzeuger die gleichgerichtete Spannung über schnell schaltende Schaltelemente oder Ventile (Dioden) an den Zwischenkreis abgibt. Im Falle der Batterie kann dies durch einen Schaltwandler, z.B. durch einen DC-DC-Wandler, geschehen. Elektrische Verbraucher, welche die Resonanzprobleme hervorrufen können, sind z.B. Elektromotoren, die über steuerbare Wechselrichter am Zwischenkreis betrieben werden. Ansonsten kommen aber auch andere elektrische Verbraucher in Frage, bei denen elektrische Energie in ähnlicher Weise in schnellen Schaltfolgen aus dem Zwischenkreis entnommen wird. Ein an dem Zwischenkreis betriebenes Gerät kann auch zeitweise als Verbraucher und zeitweise als Erzeuger wirken, wie dies beispielsweise bei einer elektrischen Maschine durch einen abwechselnden Motor- und Generatorbetrieb oder bei einem Akkumulator durch Aufladen und Entladen möglich ist.

Um die resonanzbedingten Probleme bei der Energieübertragung zu verhindern, muss in der Regel für einen stabilen Betrieb der Gleichspannungsversorgung die Regelung der Erzeuger und/oder der Verbraucher angepasst sein. Bei Motoren kann dies in der Weise erfolgen, dass die von den Motoren entnommene Leistung stark reduziert wird, wenn ein Absinken der Gleichspannung im Zwischenkreis erkannt wird. Nachteilig bei diesem Vorgehen ist die Rückwirkung eines solchen Dämpfungsalgorithmus auf das Drehmoment des angeschlossenen Motors und damit auch auf den mit dem Motor verbundenen Prozess, indem also beispielsweise die Drehgeschwindigkeit einer Druckwalze in einer Druckmaschine verändert wird. Für diese und viele weitere Anwendungen ist dies aber nicht akzeptabel.

Als alternative Lösung kann vorgesehen sein, anstelle des Zwischenkreises das dreiphasige Versorgungsnetz selbst in einer Fertigungsanlage zu verlegen und für jeden räumlich verteilten Verbraucher eine eigene Einspeiseeinheit vorzusehen.

In dem Dokument US 6 985 799 B2 ist eine Schaltungsanordnung aus einem oder mehreren Energiespeichern beschrieben, die an eine Gleichspannungsleitung angeschlossen sind, um gezielt eine benötigte Leistung in die Gleichspannungsleitung einspeisen zu können. Der Leistungsbedarf in der Gleichspannungsleitung wird ermittelt, indem in einem ersten Schritt ein Fehlersignal einer Gleichspannung der Leitung ermittelt wird, in einem zweiten Schritt aus dem Fehlersignal der Gleichspannung zusätzlich ein Fehlersignal des Gleichstroms der Leitung ermittelt wird und in einem dritten Schritt auf Grundlage des zweiten Fehlersignals die in der Gleichspannungsleitung benötigte elektrische Leistung berechnet wird, woraus dann ein Steuersignal für einen DC-DC-Wandler zum Einspeisen der fehlenden elektrischen Leistung in die Gleichspannungsleitung berechnet wird.

In dem Dokument US 2002/175522 A1 ist ein Energieversorgungssystem mit einer Turbine, einem Zwischenkreis und bedarfsweise einem Wechselrichter zum Erzeugen einer Wechselspannung beschrieben. An den Zwischenkreis kann über eine weitere Schalteinrichtung auch eine Energiespeichereinheit angeschlossen sein. Spannungsschwankungen in dem Zwischenkreis werden unabhängig von der Schalteinrichtung für den Energiespeicher nur durch ein Leistungsregelsystem ausgeglichen.

Eine Aufgabe der vorliegenden Erfindung ist, ein schwingungsfähiges Gleichspannungsnetz stabil zu betreiben, auch wenn beispielsweise Wechselrichter mit hohen Schaltfrequenzen daran betrieben werden, wobei von der Stabilisierung kein störender Einfluss auf Prozesse ausgehen soll, die von Motoren betriebenen werden, die über die Wechselrichter versorgt werden.

Die Aufgabe wird durch ein Verfahren sowie durch eine Schaltungsanordnung gemäß der unabhängigen Patentansprüche gelöst. Vorteilhafte Weiterbildungen der Erfindung sind durch die Unteransprüche gegeben.

Grundlegende Idee der Erfindung ist, an einem Zwischenkreis zur Stabilisierung von dessen elektrischer Spannung einen weiteren kleinen, aktiven Umrichter anzuschließen, der durch eine geregelte Energiepufferung zu einer Stabilisierung der Spannung beiträgt. Nach dem erfindungsgemäßen Verfahren wird dazu ein elektrischer Energiespeicher über eine steuerbare Schalteinrichtung mit dem Zwischenkreis verbunden. Beispielsweise kann ein Kondensator über einen DC-DC-Wandler an den Zwischenkreis angeschlossen werden. Durch eine Regelungseinrichtung wird ein Spannungssignal der elektrischen Spannung des Zwischenkreises ermittelt und dann die Schalteinrichtung in Abhängigkeit von dem ermittelten Spannungssignal gesteuert. Hierzu wird ein entsprechendes Steuersignal für die Schalteinrichtung erzeugt. Mittels des Steuersignals wird also von der Regelungseinrichtung ein Energieaustausch zwischen dem Zwischenkreis einerseits und dem Energiespeicher andererseits gesteuert.

Durch das erfindungsgemäße Verfahren ergibt sich der Vorteil, dass der bidirektionale Energieaustausch zwischen dem Zwischenkreis und dem Energiespeicher durch das Schalten der Schalteinrichtung gezielt auf das Resonanzverhalten des Zwischenkreises abgestimmt werden kann. Würde man dagegen den Energiespeicher ohne eine Schalteinrichtung unmittelbar an den Zwischenkreis anschließen, also beispielsweise einen Glättungskondensator direkt an den Zwischenkreis anschließen, wäre der Energieaustausch nicht auf das Resonanzverhalten abstimmbar und es würde sich auch lediglich eine andere Resonanzfrequenz durch den Einfluss des weiteren Kondensators ergeben.

Die erfindungsgemäße Schaltungsanordnung umfasst für die Durchführung des erfindungsgemäßen Verfahrens eine Energiepuffereinrichtung, die aus dem erwähnten Energiespeicher besteht, der über die steuerbare Schalteinrichtung mit einem elektrischen Anschluss zum Anschließen der Energiepuffereinrichtung an den Zwischenkreis gekoppelt ist. Zusätzlich gehört zu der Energiepuffereinrichtung eine Messeinrichtung zum Messen der elektrischen Spannung im Zwischenkreis. Die Messeinrichtung erzeugt ein Signal der gemessenen Spannung. Schließlich umfasst die Energiepuffereinrichtung auch die erwähnte Regelungseinrichtung, die dazu ausgelegt ist, die Energiepuffereinrichtung gemäß einer Ausführungsform des erfindungsgemäßen Verfahrens zu betreiben. Durch Anschließen der Energiepuffereinrichtung an einen Zwischenkreis lässt sich dessen elektrische Spannung somit nach einer Ausführungsform des erfindungsgemäßen Verfahrens stabilisieren.

Wie bereits erwähnt, erfolgt der Energieaustausch zwischen dem Energiespeicher und dem Zwischenkreis bidirektional. Aufgrund des von der Regelungseinrichtung erzeugten Steuersignals wird gezielt eine Dämpfung des Schwingungsanteils der Spannung bei der Resonanzfrequenz des Zwischenkreises erreicht. Hierzu wird zweckmäßigerweise bei betragsmäßig kleiner werdendem Spannungssignal dieses Schwingungsanteils elektrische Energie vom Energiespeicher in dem Zwischenkreis und bei betragsmäßig größer werdendem Spannungssignal dieses Schwingungsanteils elektrische Energie vom Zwischenkreis in den Energiespeicher geleitet. Hierdurch ergibt sich insgesamt ein ohmsches Verhalten der Energiepuffereinrichtung im Bereich der Resonanzfrequenz, welches somit dem Resonanzverhalten des Zwischenkreises entgegenwirkt. Mit anderen Worten wirkt die Energiepuffereinrichtung als aktiver Zwischenkreisdämpfer.

Um den bidirektionalen Energieaustausch auf das Resonanzverhalten des Zwischenkreises abzustimmen, wird in vorteilhafter Weise ein erster Anteil des Steuersignals, mit dem die Schalteinrichtung gesteuert wird, durch einen ersten Regler erzeugt, der dann Bestandteil der Regelungseinrichtung ist. Dieser erste Regler ist dazu frequenzselektiv auf die Resonanzfrequenz des Zwischenkreises abgestimmt und somit dazu ausgelegt, in einem zeitlichen Verlauf der Spannung des Zwischenkreises Schwingungen bei der Resonanzfrequenz zu dämpfen, also Abweichungen von einem Mittelwert der gleichgerichteten Spannung auszugleichen. Hierdurch können Schwingungen, wie sie die in Wechselrichtern vorkommenden schnellen Schaltvorgänge verursachen, erfolgreich von dem Regler gedämpft werden. Zum Abstimmen des Reglers auf die Resonanzfrequenz können Laufzeitglieder verwendet werden. Die Abstimmung muss nicht exakt erfolgen. Insbesondere ist hier unter einer frequenzselektiven Abstimmung zu verstehen, dass der Frequenzgang des offenen Regelkreises eine Resonanz in einem Frequenzbereich aufweist, der sich von 50% der Zwischenkreisresonanzfrequenz bis 200% der Zwischenkreisresonanzfrequenz erstreckt.

Neben der eigentlichen Spannungsstabilisierung muss bei der Energiepuffereinrichtung auch sichergestellt sein, dass der Energiespeicher stets eine ausreichende Menge Energie gespeichert hat, um über eine oder mehrere Schwingungsperioden hinweg Energie mit dem Zwischenkreis austauchen zu können. Beim Nachladen des Energiespeichers aus dem Zwischenkreis muss dabei aber darauf geachtet werden, dass hierdurch die Energiepuffereinrichtung nicht selbst wie ein Verbraucher wirkt, der den Zwischenkreis zum Schwingen anregt. Zweckmäßigerweise wird deshalb ein zweiter Anteil des Steuersignals für die Schalteinrichtung durch einen zweiten Regler der Regelungseinrichtung erzeugt, wobei durch diesen zweiten Regler eine in dem Energiespeicher gespeicherte Energiemenge auf einen vorbestimmten Wert geregelt wird. Mittels des zweiten Reglers wird dabei die im Energiespeicher gespeicherte Energiemenge aber höchstens mit einer vorbestimmten Höchstrate verändert. Durch Vorgeben einer entsprechenden Höchstrate ist es hierdurch in vorteilhafter Weise ermöglicht, eine Anregung des Zwischenkreises zum Schwingen durch das Nachladen des Energiespeichers zu vermeiden. Die begrenzte Höchstrate sorgt dafür, dass Wechsel von Schalterstellungen in der Schalteinrichtung langsamer erfolgen als die Resonanzfrequenz des Zwischenkreises. Der zweite Regler kann problemlos eine sehr große Zeitkonstante aufweisen, denn er muss lediglich in der Weise ausgelegt sein, dass im Energiespeicher ohmsche Verluste oder Reibungsverluste kompensiert werden.

Im stationären Fall, wenn keine Schwingung im Zwischenkreis beobachtbar ist, muss der Ausgang der Reglereinrichtung, also das Steuersignal, gleich Null sein. Dies wird bevorzugt mit einem niederfrequenten Hochpassfilter realisiert, der das Spannungssignal filtert, das in die Regelungseinrichtung übertragen wird.

Eine weitere Einsatzmöglichkeit der Energiepuffereinrichtung ist im Falle einer ungeregelten Einspeisung gegeben, durch welche aus der Wechselspannung des Versorgungsnetzes mittels einer netzgeführten Gleichrichtung, z.B. mittels Diodenhalbbrücken, die gleichgerichtete Zwischenkreisspannung erzeugt wird. Die gleichgerichtete Spannung weist in diesem Fall eine deutlich ausgeprägte sechste Harmonische bezüglich der Netzgrundfrequenz auf. Diese Harmonische stellt zwar keine Schwingung dar, die zu einer Instabilität des Zwischenkreises führen könnte, belastet jedoch die Komponenten im Zwischenkreis, indem etwa der Zwischenkreiskondensator ständig einen Wechselstrom dieser Frequenz mit den Leitungen des Zwischenkreises austauscht. Dies führt zu einer Erwärmung des Zwischenkreiskondensators und einer Beschleunigung des Alterungsprozesses desselben. Eine Ausführungsform des erfindungsgemäßen Verfahrens sieht in diesem Zusammenhang deshalb vor, durch die Regelungseinrichtungen Schwingungen bei einer harmonischen der Netzgrundfrequenz, oder kurz Netzfrequenz, des Versorgungsnetzes zu dämpfen, insbesondere bei der sechsten Harmonischen im Falle eines dreiphasigen Versorgungsnetzes.

Bei der Energiespeichereinrichtung, die in der Energiepuffereinrichtung verwendet wird, kann es sich um einen beliebigen Speicher handeln, der dazu in der Lage ist, einen elektrischen Strom mit einer Frequenz zu erzeugen, wie sie sich beim bidirektionalen Energieaustausch während der Dämpfung einer Schwingung ergibt. Eine bevorzugte Ausführungsform der erfindungsgemäßen Schaltungsanordnung sieht vor, dass der Energiespeicher eine elektrische Maschine umfasst und entsprechend die Schalteinrichtung einen Umrichter. In der elektrischen Maschine oder einer darin angeschlossenen Schwungmasse kann die Energie dann als rotatorische Energie gespeichert werden. Hierbei hat sich herausgestellt, dass die elektrische Maschine im Vergleich zu denjenigen elektrischen Maschinen, die sonst an den Zwischenkreis betrieben werden und die die Schwingungen im Zwischenkreis verursachen, eine deutlich kleinere Nennleistung aufweisen kann, da nur die Schwingungen im Spannungsverlauf mit der Energie dieser zusätzlichen elektrischen Maschine gedämpft werden müssen. Insbesondere ist es möglich, als Energiespeicher eine elektrischen Maschine bereitzustellen, deren Nennleistung lediglich im Bereich von 10% und weniger des Durchschnitts der Nennleistungen der Maschinen beträgt, die ebenfalls am Zwischenkreis betrieben werden und die über eine Leistungsregelung (mit entsprechend resultierender negativer Impedanz) betrieben werden. Die zusätzliche elektrische Maschine dient insbesondere nicht als Antrieb für einen Fertigungsprozess oder einen anderen Prozess, an welchen sie Energie abgeben würde, die dann nicht mehr als elektrische Energie abrufbar wäre.

Der Energiespeicher kann gemäß einer Ausführungsform der Schaltungsanordnung auch einen Kondensator umfassen, wobei dann die Schalteinrichtung durch einen DC-DC-Wandler (DC - Gleichstrom) realisiert ist. Bevorzugt ist bei dieser Ausführungsform auch eine Drossel in Reihe zum Kondensator geschaltet, um eine Stromanstiegsrate und damit eine Welligkeit im Steuerstrom zu begrenzen.

Im Folgenden wird die Erfindung noch einmal anhand von Ausführungsbeispielen konkreter erläutert. Dazu zeigt:
- FIG 1: eine schematisiertes Schaltbild einer Ausführungsform der erfindungsgemäßen Schaltungsanordnung und
- FIG 2: ein Diagramm mit schematisierten Verläufen frequenzabhängiger Eingangsimpedanzen.

Bei dem im Folgenden erläuterten Beispiel stellen die beschriebenen Komponenten der Schaltungsanordnung jeweils einzelne, unabhängig voneinander zu betrachtenden Merkmale der Schaltungsanordnung dar, welche die Schaltungsanordnung jeweils auch unabhängig voneinander weiterbilden und damit auch einzeln und in einer anderen als der gezeigten Kombination als Bestandteil der Erfindung anzusehen sind.

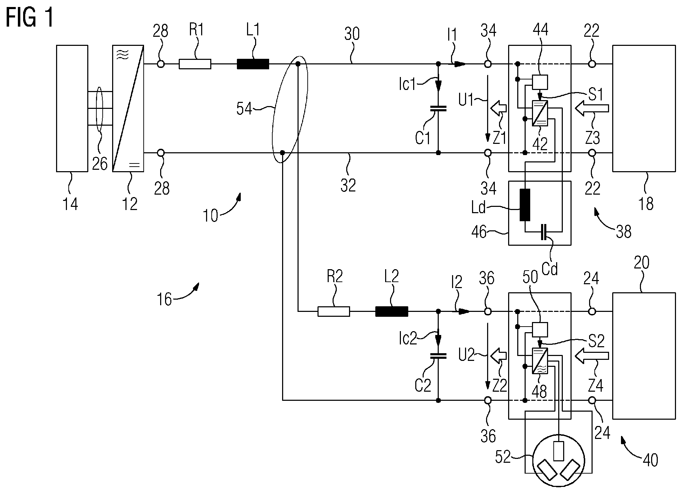

In FIG 1 ist eine Schaltungsanordnung 10 gezeigt, bei welcher eine Einspeiseeinrichtung 12 eine Wechselspannung eines Versorgungsnetzes 14 gleichrichtet und die gleichgerichtete Spannung in einen verzweigten Zwischenkreis 16 einspeist, an welchem elektrische Verbraucher 18, 20 betrieben werden. Bei der Schaltungsanordnung 10 kann es sich beispielsweise um eine Produktionsanlage oder eine Prozessanlage, ein Gleichspannungs-Bahnnetzwerk zum Versorgen von Elektroloks oder um eine Gleichspannungsversorgung für Druckmaschinen handeln. Bei den elektrischen Verbrauchern 18, 20 kann es sich beispielsweise um Elektromotoren mit (nicht dargestellten) Wechselrichter handelt. Die Wechselrichter empfangen in diesem Fall elektrische Energie aus dem Zwischenkreis 16, wobei sie hierbei über Gleichspannungsanschlüsse 22, 24 an den Zwischenkreis 16 angeschlossen sind. Die elektrische Energie wird von der Einspeiseeinrichtung 12 aus dem Versorgungsnetz 14 empfangen. Die Einspeiseeinrichtung 12 kann beispielsweise ein Gleichrichter sein, der aus Wechselspannungen mehrerer Phasen 26 des Versorgungsnetzes 14 an einem Gleichspannungsausgang 28 die gleichgerichtete Zwischenkreisspannung zwischen Leitungen 30, 32 des Zwischenkreises 16 erzeugt. Anstelle der Einspeiseeinrichtung 12 kann, wie eingangs beschrieben, auch ein anderer elektrischer Erzeuger eine gleichgerichtete Spannung am Gleichspannungsausgang 28 elektrische Energie in den Zwischenkreis 16 einspeisen.

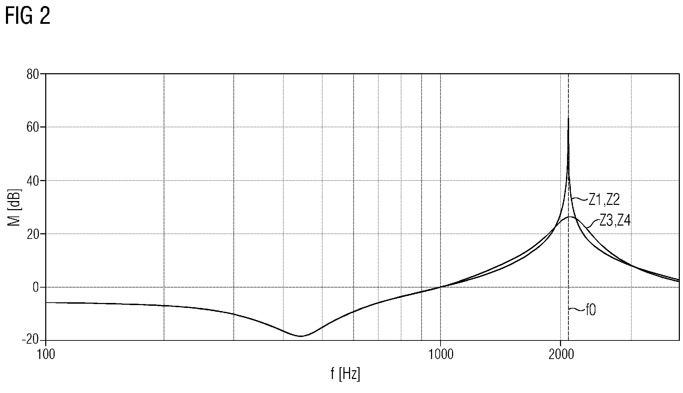

Die Leitungen 30, 32 sind verhältnismäßig lang, sodass ihre Leitungsinduktivitäten L1, L2 im Verhältnis zu ihren Leitungswiderständen R1, R2 große Impedanzen darstellen. Jedem Verbraucher 18, 20 kann ein Kondensator C1, C2 zur Pufferung der Zwischenkreisspannung vorgeschaltet sein. Typischerweise sind die Kondensatoren C1, C2 im Verhältnis zur Länge der Leitungen 30, 32 sehr nahe an den Verbrauchern 18, 20 angeordnet und über eine Verschienung mit den Verbrauchern 18, 20 verbunden. Befindet sich ein Verbraucher 18, 20 nun relativ weit entfernt von der Einspeiseeinheit 12, so entsteht über die Leitungen 30, 32 und die Verschienung die nicht mehr vernachlässigbare Induktivität L1, L2, die zu Stabilitätsproblemen an den Verbrauchern führen kann. Dies ist im Folgenden anhand von FIG 1 und FIG 2 erläutert. Aus Sicht eines Verbrauchers 18, 20 ergeben sich bezüglich Anschlussklemmen 34, 36 des Zwischenkreises 16 in Richtung zum Zwischenkreis 16 hin jeweilige Eingangsimpedanzen Z1, Z2, die frequenzabhängig sind und deren Verlauf über der Frequenz f beispielhaft in FIG 2 dargestellt ist, wobei in FIG 2 der Betrag M (Magnitude) der Impedanzen in Dezibel aufgetragen ist. Der Einfachheit halber sei hier angenommen, dass die Impedanzen Z1, Z2 den gleichen Frequenzverlauf aufweisen. Mit einer Eingangsimpedanz ist hier gemeint, dass hier nur die Impedanz desjenigen Teils Schaltungsanordnung gemessen wird, der sich links der Anschlussklemmen befindet. Der Teil recht der Anschlussklemmen wird zum Ermitteln der Eingangimpedanz als nicht vorhanden angenommen. In FIG 2 ist zu sehen, dass bei einer Resonanzfrequenz f0 die Eingangsimpedanzen Z1, Z2 aus Sicht der Verbraucher 18, 20 eine Resonanzüberhöhung aufweisen. In dem gezeigten Beispiel ergibt sich eine Resonanzfrequenz, die etwas größer als 2000 Hz ist. Der absolute Betrag der M der Eingangsimpedanzen Z1, Z2 kann beispielsweise ein Kiloohm betragen. Die Eingangsimpedanzen Z1, Z2 sind ein begrenzender Faktor für die von der Einspeiseeinrichtung 12 zu den Verbrauchern 18, 20 zu übertragenden elektrischen Leistungen, wenn das elektrische Verhalten der Verbraucher 18, 20 einer negativen Impedanz entspricht, weil z.B. die Wechselrichter der Verbraucher 18, 20 eine konstante Leistung aufnehmen bzw. abgeben.

Durch die Induktivitäten L1, L2 und die Kapazitäten C1, C2 wirkt der Zwischenkreis 16 zwischen den Gleichspannungseingang 28 und den Klemmen 34 bzw. 36 wie ein Sperrkreis mit einer Resonanzüberhöhung bei der Resonanzfrequenz f0. Wenn die Spannung U1 durch Schaltvorgänge in den Wechselrichtern des Verbrauchers 18 periodisch mit einer Frequenz f schwankt, so kann über den Zwischenkreis 16 von der Einspeiseeinrichtung 12 nur ein Strom aus dem Zwischenkreis 16 empfangen werden, dessen Stromstärke sich durch das Verhältnis I1 = U 1 / Z1 bestimmt. Aus dem Diagramm von FIG 2 geht hervor, dass der Strom I1 somit für schnelle Schaltvorgänge bei Schaltfrequenzen von größer als ungefähr 1000 Hz durch die Eingangsimpedanz Z1 beeinträchtigt ist. Entsprechendes gilt für einen Strom I2 aus dem Zwischenkreis 16 zum Verbraucher 20.

In der Schaltungsanordnung 10 ist allerdings vermieden, dass die Verbraucher 18, 20 an ihren Anschlussklemmen 22, 24 Eingangsimpedanzen Z3, Z4 in Bezug auf den Zwischenkreis 16 beobachten, die eine solche Resonanzüberhöhung bei der Resonanzfrequenz f0 aufweisen. Damit kann die von den Verbrauchern 18, 20 mit dem Zwischenkreis 16 austauschbare Leistung erhöht werden, ohne beim Regeln ihrer Wechselrichter von einem vorgegebenen Leistungssollwert abweichen zu müssen. Zur Dämpfung der Resonanzen in der Eingangsimpedanz Z1 bzw. Z2 ist in dem Zwischenkreis 16 an den Endpunkten der Leitungen 30, 32, also an den Anschlüssen 34 bzw. 36, jeweils eine Energiepuffereinrichtung 38, 40 an den Zwischenkreis 16 angeschlossen.

Die Energiepuffereinrichtung 38 umfasst einen DC-DC-Wandler 42, eine Regelungseinrichtung 44 und einen Energiespeicher 46, der einen Kondensator Cd und eine Drossel Ld umfasst. Die Regelungseinrichtung 44 kann beispielsweise einen Mikrocontroller und eine Messeinrichtung zum Messen der Spannung U1 umfassen. Bei dem DC-DC-Wandler 42, dem Kondensator Cd und der Drossel Ld kann es sich um handelsübliche Komponenten handeln.

Die Energiepuffereinrichtung 40 weist einen Wechselrichter 48, eine Regelungseinrichtung 50 und eine elektrische Maschine 52 auf. Die Regelungseinrichtung 50 kann ebenfalls einen Mikrocontroller sowie eine Messeinrichtung zum Messen der Spannung U2 umfassen. Die elektrische Maschine 52 kann beispielsweise ein Motor sein, der Energie in Form von Rotationsenergie in seinem Rotor oder in einer mit einer Welle des Motors 42 gekoppelten Schwungmasse speichern kann. Die elektrische Maschine 52 treibt insbesondere keinen Prozess, wie etwa ein Fließband oder eine Walze oder der Gleichen an. Mit anderen Worten gibt die elektrische Maschine 52 keine Rotationsenergie über eine mechanische Kopplung an ein anderes Gerät ab, d.h. die elektrische Maschine 52 stellt keinen Verbraucher dar, wie es die Verbraucher 18, 20 sind.

Die Reglereinrichtung 44 misst die Spannung U1 und erkennt, ob Schwingungen in der Zwischenkreisspannung U1 an den Anschlüssen 34 auftreten. Ist dies der Fall, so erzeugt die Regelungseinrichtung 44 ein Stellsignal S1, das an den steuerbaren DC-DC-Wandler 42 übertragen wird. Dieser wird gemäß dem Steuersignal S1 derart geschaltet, dass der Kondensator Cd Energie aufnimmt, wenn durch die Schwingung die Spannung U1 ansteigt, während der Kondensator Cd Energie in den Zwischenkreis 16 abgibt, wenn die Spannung U1 abfällt. So wird durch Schalten des DC-DC-Wandlers 42 mit einer Frequenz im Bereich der Resonanzfrequenz f0 die Schwankung der Spannung U1 kompensiert, sodass an den Klemmen 34 die Spannung U1 einen nahezu gleichförmigen zeitlichen Verlauf aufweist, d.h. es treten in dem gezeigten Beispiel im Bereich größer 1000 Hz Schwingungen mit einer geringern Amplitude auf. Analog dazu erzeugt die Regelungseinrichtung 50 ein Steuersignal S2 in Abhängigkeit von der Spannung U2. Mittels des Steuersignals S2 wird der Wechselrichter beispielsweise durch eine feldorientierte Regelung, wie sie aus dem Stand der Technik an sich bekannt ist, angesteuert. Dabei wird das Drehfeld der elektrischen Maschine 52 derart einstellt, dass elektrische Energie zwischen dem Magnetfeld der elektrischen Maschine 52 und dem Zwischenkreis 16 ausgetauscht wird. Die Veränderung der in dem Magnetfeld gespeicherten Energie hat dabei auch eine Änderung der Drehzahl der elektrischen Maschine 52 zur Folge, was aber hier problemlos ist, da die elektrische Maschine 52 an keinen Prozess gekoppelt ist. Die Regelungseinrichtung 50 bewirkt dabei durch das Steuersignal S2, dass dem Zwischenkreis Energie entzogen und dem Energiepuffer, d.h. der elektrischen Maschine 52 zugeführt wird, falls die Spannung U2 steigt. Bei sinkender Spannung U2 erfolgt der Energiefluss umgekehrt.

Durch den geregelten Energieaustausch der Energiepuffereinrichtungen 38, 40 mit dem Zwischenkreis 16 ergibt sich an den Anschlüssen 22, 24 aus Sicht der Verbraucher 18 bzw. 20 eine Eingangsimpedanz Z3 bzw. Z4, die im Bereich der Resonanzfrequenz f0 um mehrere Größenordnungen abgesenkt ist, sodass die verbraucherseitige Leistung deutlich erhöht werden kann (siehe FIG 2).

Die Regelungseinrichtungen 44, 50 weisen (nicht dargestellte) Hochpassfilter auf, durch welche das Spannungssignal der Spannung U1 bzw. U2 gefiltert wird, so dass das Steuersignal S1 bzw. S2 gleich 0 ist, falls die Spannungsverläufe U1 bzw. U2 keine Welligkeit aufweisen. Zur Abstimmung der Regler der Regelungseinrichtungen 44, 50 auf die Resonanzfrequenz f0 können noch weitere Laufzeitglieder vorgesehen sein.

Neben ihrem Regler für die eigentliche Schwingungsdämpfung kann jede der Regelungseinrichtungen 44, 50 einen zweiten, getrennten Regelungsalgorithmus ausführen. Dieser ist dann dafür zuständig, im Dämpfungselement, also den Kondensator Cd bzw. die elektrische Maschine 52, so viel Energie zu speichern, dass für einen vorbestimmten Zeitraum aus dem Energiespeicher 46, 52 Energie in den Zwischenkreis 16 einspeicherbar ist, dass die Verbraucher 18, 20 störungsfrei betrieben werden können. Im Falle der elektrischen Maschine 52 kann beispielsweise vorgesehen sein, deren Drehzahl in der geometrischen Mitte eines vorbestimmten Drehzahlbereichs einzuregeln. Für den Fall, dass man den gesamten Drehzahlbereich nutzt, wäre dies die Drehzahl, die 1 / √2 der maximalen Drehzahl entspricht. Da die Rotationsenergie E sich aus E = 1 / 2 * J * w² ergibt (J - Trägheitsmoment des Rotors, w - Winkelgeschwindigkeit des Rotors), kann dann der Rotor der elektrischen Maschine 52 den gleichen Betrag an Energie aufnehmen oder abgeben. Die Veränderung der Rotationsenergie E durch den Rotor erfolgt dabei stets langsamer als eine Energieaufnahme bzw. Abgabe durch die Verbraucher 18, 20.

Das Schaubild von FIG 1 zeigt die Topologie, bei der die Dämpfungsmodule, d.h. die Energiepuffereinrichtungen 38, 40, in der unmittelbaren Nähe der Verbraucher 18, 20 angeordnet sind. Möglich ist jedoch noch eine Vielzahl weiterer Topologien, bei denen die Energiepuffereinrichtungen 38, 40 an einer anderen Stelle im Zwischenkreis 16 angeschlossen sind, beispielsweise in der Nähe eines Verzweigungspunktes 54, sodass mit einer Energiepuffereinrichtung zwei Verbraucher stabilisiert werden können, oder in der Nähe der Einspeisung. Eine Stabilisierung in der Nähe der Einspeisung, oder allgemein in der Nähe eines Erzeugers, weist den Vorteil auf, dass dieser elektrische Leistung besonders verlustarm in den Zwischenkreis abgeben kann. Es kann selbstverständlich auch vorgesehen sein, ausschließlich Energiespeichereinrichtungen mit elektrischen Maschinen oder ausschließlich solche mit Kondensatoren bereitzustellen. Die hier gezeigten Typen von Energiepuffereinrichtungen 38, 40 sind zudem nur beispielhaft.

Durch die aktive Bedämpfung des Resonanzverhaltens des Zwischenkreises 16 mittels der Energiepuffereinrichtungen 38, 40 und ähnliche Einrichtungen ist es möglich, weitverzweigte Gleichspannungszwischenkreise aufzubauen und dabei nur eine netzseitige Einspeisung zu verwenden. Für das Bereitstellen der Energiepuffereinrichtungen 38, 40 sind lediglich Standardkomponenten nötig. Hierbei müssen die Komponenten, also der DC-DC-Wandler 42, der Kondensator Cd, die Drossel Ld bzw. das Motormodul mit der elektrischen Maschine 52 und dem Wechselrichter 38 im Vergleich zu den Verbrauchern 18, 20 nur eine relativ kleine Nennleistung aufweisen, sodass sich die Energiepuffereinrichtungen 38, 40 auch kostengünstig bereitstellen lassen. An den Verbrauchern 18, 20 selbst müssen keine Maßnahmen getroffen werden, so dass die von ihnen betriebenen Prozesse (Fließbänder, Walzen, elektrische Loks und dergleichen) nicht in Abhängigkeit von Schwingungen im Zwischenkreis 16 betrieben werden müssen. Insgesamt fallen aber auch im Zwischenkreis die Belastungen der Komponenten kleiner aus, da die Schwingungen in der Zwischenkreisspannung insgesamt kleiner ausfallen. So ergeben sich z.B. Kondensatorströme Ic1, Ic2 der Zwischenkreiskondensatoren, die eine geringere Welligkeit aufweisen, wenn der Zwischenkreis 16 unbelastet ist.

## Patentansprüche

1. Verfahren zum Stabilisieren einer elektrischen Spannung (U1,U2) in einem Zwischenkreis (16), in welchen von einem Erzeuger (12) eine gleichgerichtete Spannung eingespeist und an welchem ein elektrischer Verbraucher (18,20) betrieben wird, umfassend die Schritte:
- Verbinden eines elektrischen Energiespeichers (46,52) über eine steuerbare Schalteinrichtung (42,48) mit dem Zwischenkreis (16),
- Ermitteln eines Spannungssignals zu der elektrischen Spannung (U1,U2) des Zwischenkreises (16) durch eine Regelungseinrichtung (44,50),
- Erzeugen eines Steuersignals (S1,S2) für die Schalteinrichtung (42,48) in Abhängigkeit von dem ermittelten Spannungssignal durch die Regelungseinrichtung (44,50) und hierdurch Steuern eines Energieaustauschs zwischen dem Zwischenkreis (16) und dem Energiespeicher (46,52),
**dadurch gekennzeichnet, dass** der Energieaustausch zwischen dem Zwischenkreis (16) und dem Energiespeicher (46, 52) durch das Schalten der Schalteinrichtung (42, 48) bidirektional und gezielt auf ein Resonanzverhalten des Zwischenkreises (16) abgestimmt erfolgt und dabei aufgrund des Energieaustauschs gemäß dem Steuersignal (S1,S2) in der Spannung (U1, U2) ein Schwingungsanteil bei einer Resonanzfrequenz des Zwischenkreises (16) gedämpft wird, indem Abweichungen von einem Mittelwert der gleichgerichteten Spannung ausgeglichen werden.

2. Verfahren nach Anspruch 1, wobei zum Dämpfen des Schwingungsanteils elektrische Energie vom Energiespeicher (46,52) in den Zwischenkreis (16) geleitet wird, falls die Spannung (U1, U2) durch den Schwingungsanteil abfällt, und elektrische Energie vom Zwischenkreis (16) in den Energiespeicher (46,52) geleitet wird, falls die Spannung (U1, U2) durch den Schwingungsanteil ansteigt.

3. Verfahren nach Anspruch 1 oder 2, wobei ein erster Anteil des Steuersignals (S1,S2) durch einen ersten Regler der Regelungseinrichtung (44,50) erzeugt wird, der frequenzselektiv auf die Resonanzfrequenz (f0) des Zwischenkreises (16) abgestimmt ist.

4. Verfahren nach einem der vorhergehenden Ansprüche, wobei ein zweiter Anteil des Steuersignals (S1,S2) durch einen zweiten Regler der Regelungseinrichtung (44,50) erzeugt wird, durch welchen eine in dem Energiespeicher (46,52) gespeicherte Energiemenge auf einen vorbestimmten Wert geregelt wird, wobei die Energiemenge durch den zweiten Regler höchstens mit einer vorbestimmten Höchstrate verändert wird.

5. Verfahren nach einem der vorhergehenden Ansprüche, wobei das Spannungssignal in der Regelungseinrichtung (44,50) durch ein Hochpassfilter gefiltert wird.

6. Verfahren nach einem der vorhergehenden Ansprüche, wobei durch die Regelungseinrichtung (44,50) Schwingungen bei einer Harmonischen der Netzfrequenz des Versorgungsnetzes (14), insbesondere bei der sechsten Harmonischen im Falle eines dreiphasigen Versorgungsnetzes (14), gedämpft werden.

7. Schaltungsanordnung (10) zum Stabilisieren einer elektrischen Spannung (U1,U2) in einem Zwischenkreis (16), wobei zumindest eine Energiepuffereinrichtung (38,40) bereitgestellt ist, wobei die Energiepuffereinrichtung (38,40) aufweist:
- einen elektrischen Anschluss (34,36) zum Anschließen der Energiepuffereinrichtung (38,40) an den Zwischenkreis (16),
- eine steuerbare Schalteinrichtung (42,48),
- einen Energiespeicher (46,52), welcher über die Schalteinrichtung (42,48) mit dem elektrischen Anschluss (34,36) gekoppelt ist,
- eine Messeinrichtung (44,50) zum Messen der elektrischen Spannung (U1,U2) in dem Zwischenkreis (16) und zum Erzeugen eines Spannungssignals in Abhängigkeit von der gemessenen Spannung (U1,U2),
- eine Reglereinrichtung (44,50), die dazu ausgelegt ist, die Energiepuffereinrichtung (38,40) gemäß einem Verfahren nach einem der vorhergehenden Ansprüche zu betreiben.

8. Schaltungsanordnung (10) nach Anspruch 7, wobei der Energiespeicher (52) eine elektrische Maschine und die Schalteinrichtung (48) einen Umrichter umfasst.

9. Schaltungsanordnung (10) nach Anspruch 7 oder 8, wobei der Energiespeicher (46) einen Kondensator (Cd) und bevorzugt auch eine Drossel (Ld) umfasst und die Schalteinrichtung (42) einen DC-DC-Wandler umfasst.

10. Schaltungsanordnung (10) nach einem der Ansprüche 7 bis 9, wobei die Energiepuffereinrichtung (38,40) an einem Zwischenkreis (16) zwischen einer Einspeiseeinrichtung (12) und einem Wechselrichter einer elektrischen Maschine (18,20) angeschlossen ist, wobei der Wechselrichter für eine Leistungsregelung der elektrischen Maschine (18,20) eingerichtet ist.

## Claims

1. Method for stabilising electric voltage (U1, U2) in an intermediate circuit (16), in which a rectified voltage is fed from a generator (12) and on which an electric load (18, 20) is operated, comprising the steps:
- connecting an electric energy store (46, 52) via a controllable switching device (42, 48) to the intermediate circuit (16),
- determining a voltage signal to the electric voltage (U1, U2) of the intermediate circuit (16) by means of a regulating device (44, 50),
- generating a control signal (S1, S2) for the switching device (42, 48) as a function of the determined voltage signal by the regulating device (44, 50) and in this way controlling an exchange of energy between the intermediate circuit (16) and the energy store (46, 52),
**characterised in that**
the exchange of energy between the intermediate circuit (16) and the energy store (46, 52) by the switching of the switching device (42, 48) takes place bidirectionally and attuned specifically to the resonance behaviour of the intermediate circuit (16) and in this way, on account of the exchange of energy according to the control signal (S1, S2) in the voltage (U1, U2), an oscillation part is damped at a resonance frequency of the intermediate circuit (16) by deviations from an average value of the rectified voltage being compensated.

2. Method according to claim 1, wherein in order to dampen the oscillation part, electrical energy is routed from the energy store (46, 52) into the intermediate circuit (16), if the voltage (U1, U2) through the oscillation part drops, and electrical energy is routed from the intermediate circuit (16) into the energy store (46, 52) if the voltage (U1, U2) through the oscillation part increases.

3. Method according to claim 1 or 2, wherein a first part of the control signal (S1, S2) is generated by a first regulator of the regulating device (44, 50), which is attuned to the resonance frequency (f0) of the intermediate circuit (16) in a frequency selective manner.

4. Method according to one of the preceding claims, wherein a second part of the control signal (S1, S2) is generated by a second regulator of the regulating device (44, 50), by means of which a quantity of energy stored in the energy store (46, 52) is regulated to a predetermined value, wherein the quantity of energy is changed by the second regulator at most with a predetermined highest rate.

5. Method according to one of the preceding claims, wherein the voltage signal in the regulating device (44, 50) is filtered by a high pass filter.

6. Method according to one of the preceding claims, wherein the regulating device (44, 50) dampens oscillations in a harmonic of the mains frequency of the power supply (14), in particular in the sixth harmonic in the event of a three-phase power supply (14).

7. Switching arrangement (10) for stabilising electric voltage (U1, U2) in an intermediate circuit (16), wherein at least one energy buffer device (38, 40) is provided, wherein the energy buffer device (38, 40) has:
- an electrical connection (34, 36) for connecting the energy buffer device (38, 40) to the intermediate circuit (16),
- a controllable switching device (42, 48),
- an energy store (46, 52), which is coupled to the electrical connection (34, 36) by way of the switching device (42, 48),
- a measuring device (44, 50) for measuring the electric voltage (U1, U2) in the intermediate circuit (16) and for generating a voltage signal as a function of the measured voltage (U1, U2),
- a regulating device (44, 50) which is designed to operate the energy buffer device (38, 40) in accordance with a method according to one of the preceding claims.

8. Switching arrangement (10) according to claim 7, wherein the energy store (52) comprises an electric machine and the switching device (48) comprises a converter.

9. Switching arrangement (10) according to claim 7 or 8, wherein the energy store (46) comprises a capacitor (Cd) and preferably also a throttle (Ld) and the switching device (42) comprises a DC-DC converter.

10. Switching arrangement (10) according to one of claims 7 to 9, wherein the energy buffer device (38, 40) is connected to an intermediate circuit (16) between a feed device (12) and an inverter of an electric machine (18, 20), wherein the inverter is configured to regulate the power output of the electric machine (18, 20).

## Revendications

1. Procédé de stabilisation d'une tension ( U1, U2 ) électrique dans un circuit ( 16 ) intermédiaire, dans lequel une tension redressée est injectée par un producteur ( 12 ) et sur lequel on fait fonctionner un consommateur ( 18, 20 ) électrique, comprenant les stades :
- liaison d'un accumulateur ( 46, 52 ) d'énergie électrique au circuit ( 16 ) intermédiaire par un dispositif ( 42, 48 ) de commutation pouvant être commandé,
- détermination d'un signal de tension par rapport à la tension (U1, U2 ) électrique du circuit ( 16 ) intermédiaire par un dispositif ( 44, 50 ) de régulation,
- production d'un signal ( S1, S2 ) de commande du dispositif ( 42, 48 ) de commutation en fonction du signal de tension déterminé par le dispositif ( 44, 50 ) de régulation et commande ainsi d'un échange d'énergie entre le circuit ( 16 ) intermédiaire et l'accumulateur ( 46, 52 ) d'énergie,
**caractérisé en ce que**
l'échange d'énergie entre le circuit ( 16 ) intermédiaire et l'accumulateur ( 46, 52 ) d'énergie s'effectue d'une manière bidirectionnelle et d'une manière adaptée de façon ciblée à un comportement de résonance du circuit ( 16 ) intermédiaire par la commutation du dispositif ( 42, 48 ) de commutation et, sur la base de l'échange d'énergie conformément au signal ( S1, S2 ) de commande, on atténue dans la tension (U1, U2 ) une composante d'oscillation à une fréquence de résonance du circuit ( 16 ) intermédiaire, en compensant des écarts à une valeur moyenne de la tension redressée.

2. Procédé suivant la revendication 1, dans lequel, pour atténuer la composante d'oscillation, on envoie de l'énergie électrique de l'accumulateur ( 46, 52 ) d'énergie au circuit ( 16 ) intermédiaire si la tension ( U1, U2 ) chute par la composante d'oscillation et on envoie de l'énergie électrique du circuit ( 16 ) intermédiaire à l'accumulateur ( 46, 52 ) d'énergie si la tension ( U1, U2 ) s'élève par la composante d'oscillation.

3. Procédé suivant la revendication 1 ou 2, dans lequel on produit une première partie du signal ( S1, S2 ) de commande par un premier régleur du dispositif ( 44, 50 ) de régulation, qui est adaptée sélectivement en fréquence à la fréquence ( f0 ) de résonance du circuit ( 16 ) intermédiaire.

4. Procédé suivant l'une des revendications précédentes, dans lequel on produit une deuxième partie du signal ( S1, S2 ) de commande par un deuxième régleur du dispositif ( 44, 50 ) de régulation, par laquelle on régule à une valeur définie à l'avance une quantité d'énergie emmagasinée dans l'accumulateur ( 46, 52 ) d'énergie, la quantité d'énergie étant modifiée par le deuxième régleur au plus à un taux le plus grand défini à l'avance.

5. Procédé suivant l'une des revendications précédentes, dans lequel on filtre le signal de tension dans le dispositif ( 44, 50 ) de régulation par un filtre passe-haut.

6. Procédé suivant l'une des revendications précédentes, dans lequel on atténue par le dispositif ( 44, 50 ) de régulation des oscillations à un harmonique de la fréquence du réseau ( 14 ) d'alimentation, notamment au sixième harmonique dans le cas d'un réseau ( 14 ) d'alimentation triphasé.

7. Montage ( 10 ) de stabilisation d'une tension ( U1, U2 ) électrique dans un circuit ( 16 ) intermédiaire, dans lequel il est mis à disposition au moins un dispositif ( 38, 40 ) tampon d'énergie, le dispositif ( 38, 40 ) tampon d'énergie rayant :
- une borne ( 34, 36 ) électrique de connexion du dispositif ( 38, 40 ) tampon d'énergie au circuit ( 16 ) intermédiaire,
- un dispositif ( 42, 48 ) de commutation, qui peut être commandé,
- un accumulateur ( 46, 52 ) d'énergie, qui est couplé à la borne ( 34, 36 ) électrique par le dispositif ( 42, 48 ) de commutation,
- un dispositif ( 44, 50 ) de mesure de la tension ( U1, U2 ) électrique ( 16 ) intermédiaire et de production d'un signal de tension en fonction de la tension ( U1, U2 ) mesurée,
- un dispositif ( 44, 50 ) de régulation, qui est conçu pour faire fonctionner le dispositif ( 38, 40 ) tampon d'énergie suivant un procédé suivant l'une des revendications précédentes.

8. Montage ( 10 ) suivant la revendication 7, dans lequel l'accumulateur ( 52 ) d'énergie comprend une machine électrique et le dispositif ( 48 ) de commutation un convertisseur.

9. Montage ( 10 ) suivant la revendication 7 ou 8, dans lequel l'accumulateur ( 46 ) d'énergie comprend un condensateur ( Cd ) et de préférence aussi une bobine ( Ld ) et le dispositif ( 42 ) de commutateur un convertisseur courant continu-courant continu.

10. Montage ( 10 ) suivant l'une des revendications 7 à 9, dans lequel le dispositif ( 38, 40 ) tampon d'énergie est relié à un circuit ( 16 ) intermédiaire entre un dispositif ( 12 ) d'alimentation et un onduleur d'une machine ( 18, 20 ) électrique, l'onduleur étant agencé pour une régulation de puissance de la machine ( 18, 20 ) électrique.
